# EUROPEAN PATENT SPECIFICATION

(11) **EP 4 425 399 B1**
(45) Date of publication and mention of the grant of the patent: **25.02.2026**
(21) Application number: 23382192.5
(22) Date of filing: 02.03.2023
(51) Int. Cl.: G06Q 10/08, G06Q 10/06

(54) **MANAGING AIRCRAFT INFORMATION**
VERWALTUNG VON FLUGZEUGINFORMATIONEN
GESTION D'INFORMATIONS D'AÉRONEF

(43) Date of publication of application: 04.09.2024
(73) Proprietor: SITA Information Networking Computing Canada Inc, Montreal, Québec H3A 1G1 (CA)
(72) Inventor: Mayo, Olivier, Montreal (CA); Rybakov, Sergei, Montreal (CA); Ahmed, Kemal, London (GB); Flo, Pere, Barcelona (ES); Boozarjomehri, Elham, Montreal (CA)
(74) Representative: Reddie & Grose LLP

(56) References cited:
- WO-A2-03/021503
- US-A1- 2003 109 973
- US-B1- 10 614 392

## Description

### TECHNICAL FIELD

The present invention relates to a method of managing aircraft information. A corresponding computer system and non-transitory memory are provided.

### BACKGROUND

Modern air travel relies on communication between a number of different parties, such as between aircraft, airline operators, and airport controllers. As the airline industry has evolved, a number is disparate communication systems have been developed to provide communication between particular parts of the flight ecosystem. For example, the ACARS system provides messaging capability between aircraft and ground stations.

However, communication for airlines can be extremely challenging given the considerable number of people involved on a flight (e.g., pilots, airline operators, airport controllers, etc.) and heterogeneous means of communication (ACARS, SMS, telephone, walkie-talkie, IP messaging, email, in person, etc.), while poor communication unfortunately results in longer turnaround times that are extremely costly to airlines.

It is desirable to provide a means of integrating different forms of communication so that a user can communicate with all relevant parties through a single interface, as well as access relevant flight and turnaround information in a single location. US 10 614 392 B1 relates to systems and methods for providing user-configurable aircraft status displays. US 2003/109973 A1 relates to the field of aircraft operations and maintenance. WO 03/021503 A2 relates generally to managing maintenance of equipment

### SUMMARY OF INVENTION

The invention is set out in the independent claims. Embodiments of the invention are set out in the dependent claims.

According to a first aspect, a method of managing aircraft information is provided. The method comprises receiving scheduling information, the scheduling information comprising flight and turnaround information relating to a plurality of aircraft; extracting the flight and turnaround information for each of the plurality of aircraft from the scheduling information; assigning the extracted flight and turnaround information for each of the plurality of aircraft to a channel, wherein each channel corresponds to one of the plurality of aircraft; and providing access to the channels to a user.

Optionally, the method further comprises determining, for each aircraft based on the extracted flight and turnaround information for that aircraft, one or more turnaround tasks to be completed; monitoring the progress of the one or more turnaround tasks; and presenting a current status of the one or more turnaround tasks.

Optionally, determining, for each aircraft based on the extracted flight and turnaround information for that aircraft, one or more turnaround tasks to be completed comprises: obtaining an aircraft identification from the extracted flight and turnaround information; and querying a database for turnaround tasks corresponding to the aircraft identification.

Optionally, the method further comprises receiving a plurality of communications; extracting an aircraft identification from each of the plurality of communications, the aircraft identification indicating an aircraft the message is associated with; and assigning each of the plurality of communications to the channel corresponding to the aircraft associated with each message.

Optionally, the plurality of communications comprise communications of a first type and communications of a second type; and the communications of the first type and the communications of the second type are presented in the channel in an integrated manner.

Optionally, the communications of a first type are ACARS messages, and receiving a plurality of communications comprises: receiving one or more ACARS messages extracting an aircraft identification from each of the one or more the ACARS messages, the aircraft identification identifying an aircraft from which the corresponding ACARS message originated; converting each of the one or more ACARS messages to a message of the second type; and assigning each of the one or more converted ACARS messages to a channel corresponding to the aircraft from which the message originated.

Optionally, each channel corresponding to an aircraft is not capable of displaying ACARS messages but is capable of displaying messages of the second type.

Optionally, the communications of the second type are not ACARS messages.

Optionally, the communications of the second type are SMS messages, emails, or IP messages.

Optionally, the one or more ACARS messages comprise a notification of a status of the originating aircraft or a component of the originating aircraft.

Optionally, the method further comprises determining, for each aircraft based on the extracted flight and turnaround information for that aircraft, one or more status events; monitoring the progress of the one or more status events based on the one or more ACARS messages; and presenting a current status of the one or more status events.

Optionally, determining, for each aircraft based on the extracted flight and turnaround information for that aircraft, one or more status events comprises obtaining an aircraft identification from the extracted flight and turnaround information; and querying a database for status events corresponding to the aircraft identification.

Optionally, the aircraft identification uniquely identifies an aircraft.

Optionally, the aircraft identification comprises one or more of an aircraft registration code, an aircraft model, and a flight number.

Optionally, providing access to the channel to a user comprises receiving a channel access request from a user; receiving a permission status of the user; and allowing access to the channel in accordance with the permission status.

Optionally, if the permission status of the user is indicative of a full permission, allowing access in accordance with the permission status comprises allowing the user to view and send communications of a first type and a second type.

Optionally, if the permission status of the user is indicative of a partial permission, allowing access in accordance with the permission status comprises allowing the user to view but not send communications of the first type, and view and send communications of the second type.

Optionally, if the permission status of the user is indicative of no permission, allowing access in accordance with the permission status comprises not allowing the user to view or send communications of the first type, but allowing the user to view and send communications of the second type.

Optionally, the communications of a first type are ACARS messages, and the method further comprises receiving, in a channel and from a user with full permission, a message to be sent to the aircraft corresponding to that channel; converting the message into an ACARS message; and sending the ACARS message to the aircraft.

According to a second aspect, a computer system configured to perform the method of the first aspect is provided.

According to a third aspect, a non-transitory memory having stored thereon instructions that, when executed on the computer system of the second aspect, cause the computer system to perform the method of the first aspect is provided.

### BRIEF DESCRIPTION OF THE DRAWINGS

Exemplary only implementations of the invention are described with reference to the following figures:
Figure 1 illustrates a method of managing aircraft information;
Figure 2 illustrates a channel of an aircraft information management application according to aspects of the invention; and
Figure 3 illustrates another channel of an aircraft information management application according to aspects of the invention.

### DETAILED DESCRIPTION OF THE INVENTION

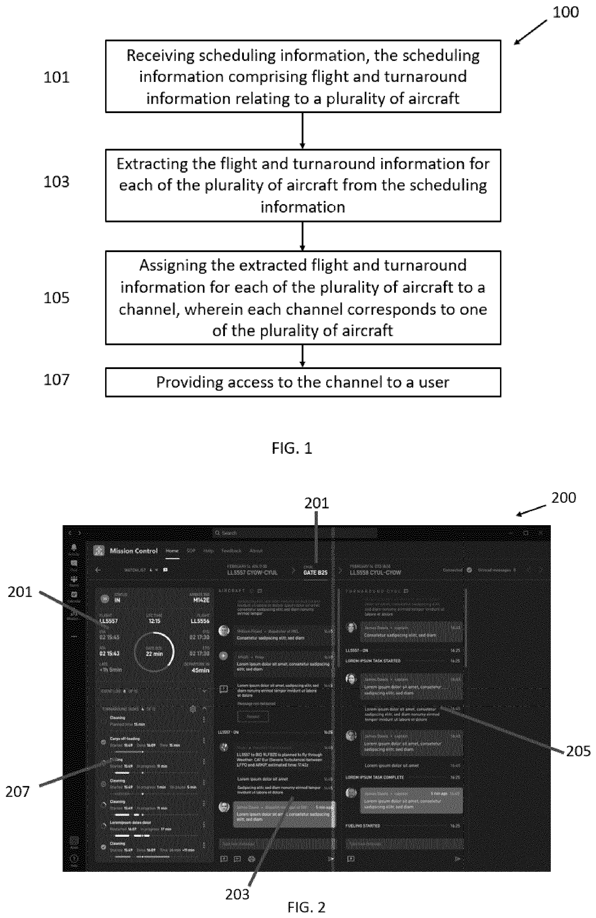

Figure 1 illustrates a method 100 for managing aircraft information. The method begins at step 101 and comprises receiving scheduling information. The scheduling information comprises flight and turnaround information relating to a plurality of aircraft. For example, this may be all of the aircraft operated by a particular airline. The flight and turnaround information may include information such as aircraft identification codes, flight numbers, flight destinations, flight origins, flight times, aircraft stands, etc.

The flight and turnaround information for each of the plurality of aircraft is extracted from the scheduling information at step 103 and assigned to a channel at step 105. Each channel corresponds to a different aircraft, and conversely each aircraft has its own dedicated channel. That is, there is a one-to-one correspondence between aircrafts and channels.

A channel, as defined herein, is a section within an application for managing aircraft information. An exemplary channel 200 is illustrated in Figure 2. Suitable applications include web applications, computer programs, etc. In the illustrated embodiments, the application is implemented through Microsoft Teams. However, this is not limiting and it will be appreciated that any of the features discussed below can be implemented in an application implemented in another format.

At step 107, access to the channels is provided to a user. This allows the user, depending upon their permission level, to view certain information relating to the aircraft associated with a particular channel.

As noted above, Figure 2 illustrates an exemplary view of a channel 200 within an application for managing aircraft information. Information that is accessible through channel 200 includes flight information 201 for the aircraft corresponding to the channel, communications to and from the aircraft corresponding to the channel 203, other communications relating to the aircraft corresponding to the channel 205, and turnaround tasks 207 associated with the aircraft corresponding to the channel.

It may be beneficial to monitor the progress of turnaround tasks 207 and present the progress to a user of the channel 200. This may be done by determining one or more turnaround tasks 207 to be completed for the aircraft corresponding to the channel, monitoring the progress of the one or more turnaround tasks 207, and presenting a current status of the one or more turnaround tasks 207 within the channel 200.

The turnaround tasks 207 to be monitored can be manually input by a user of the application, but it is preferred that they are automatically obtained. This may be implemented by obtaining an aircraft identification from the extracted flight and turnaround information and querying a database for turnaround tasks 207 corresponding to the aircraft identification. The turnaround tasks 207 may be set by an airline, dependent upon the aircraft model, or some combination of these and/or other factors. The turnaround tasks 207 are generally tasks that require manual input in some form to inform their progress. The application can receive messages from suitably authorised users (in a number of formats, such as SMS, IP messaging, etc.) to provide status updates for the turnaround tasks 207, such as "in progress" or "completed".

It will be appreciated that while some information may also be presented in the channel 200, such as the flight information 201 and the communications 203, 205, other information presented may be dependent upon a current status of the aircraft corresponding to the channel 200. For example, turnaround tasks 207 may not be present if the aircraft is currently in flight.

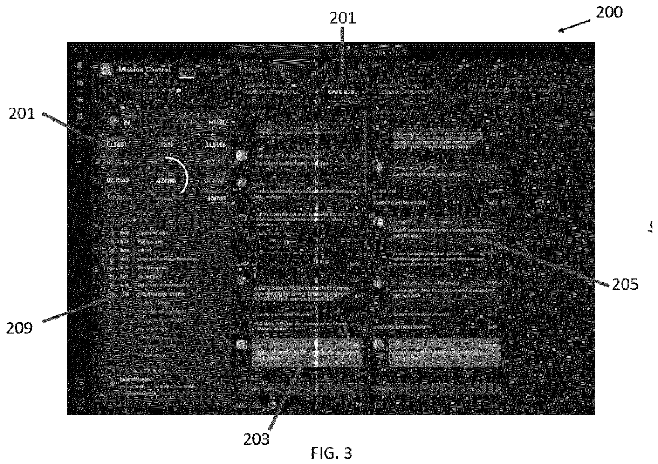

While the turnaround tasks 207 may require manual updating, some events can be monitored automatically. Figure 3 illustrates another view of channel 200, which generally corresponds to the view in Figure 2 except that status events 209 have replaced the turnaround events 207. The status events 209 correspond to events that the aircraft is configured to provide automatic updates on. For example, the avionics of the aircraft may be configured to transmit certain notifications when a particular event, such as "cargo door open" is detected. The status events 209 that can be monitored will depend upon what events the aircraft is configured to monitor.

The aircraft may notify the application of these events using ACARS (Aircraft Communications Addressing and Reporting System) messaging. Monitoring the status events 209 may be performed by determining, for each aircraft based on the extracted flight and turnaround information for that aircraft, one or more status events209 ; monitoring the progress of the one or more status events 209 based on one or more ACARS messages received from an aircraft; and presenting a current status of the one or more status events 209. The status events 209 to be monitored for a particular aircraft can be determined in a similar way to the turnaround tasks 207.

ACARS messages can typically only be received by special, legacy hardware. Therefore, it is desirable for the system to be able to convert ACARS messages into another message format (e.g., IP messages) that can more easily be interpreted and/or displayed within the channel.

This also enables communications to and from the aircraft 203 to be displayed within the channel 200, alongside other, non-ACARS communications 205 relating to the aircraft. This can be done by receiving one or more ACARS messages, extracting an aircraft identification from each of the one or more the ACARS messages (the aircraft identification identifying an aircraft from which the corresponding ACARS message originated), converting each of the one or more ACARS messages to a message of the second type, and assigning each of the one or more converted ACARS messages to a channel corresponding to the aircraft from which the message originated.

Similarly, it is also desirable that a message can be sent to an aircraft from the channel 200. This requires receiving, in a channel and from a user with full permission, a message to be sent to the aircraft corresponding to that channel, converting the message, received in a format such as an IP message, into an ACARS message, and sending the ACARS message to the aircraft.

Whilst it is beneficial for some users to be able to view all of the information relating to a particular aircraft, and to send messages to the aircraft, it may be desirable to limit this access to only certain users. For other users, it may be desirable to not allow them to send messages to the aircraft but to view messages sent to and from the aircraft. Yet for other users, it may be desirable to not allow them to view or sent messages to or from the aircraft, but instead only to see other information (such as turnaround tasks 207).

To achieve this, providing access to the channel to a user may comprise receiving a channel access request from a user; receiving a permission status of the user; and allowing access to the channel in accordance with the permission status.

It may be preferably, as noted above, to have three different levels of permission: full permission, partial permission, and no permission, relating to the permission that a user has with respect to communications to and from the aircraft. In this case:
- if the permission status of the user is indicative of a full permission, allowing access in accordance with the permission status comprises allowing the user to view and send communications of a first type and a second type;
- if the permission status of the user is indicative of a partial permission, allowing access in accordance with the permission status comprises allowing the user to view but not send communications of the first type, and view and send communications of the second type; and
- if the permission status of the user is indicative of no permission, allowing access in accordance with the permission status comprises not allowing the user to view or send communications of the first type, but allowing the user to view and send communications of the second type.
The above description relates only to exemplary embodiments and other variations or modifications are anticipated based on the teaching herein. The term aircraft includes, but is not limited to, aeroplanes, helicopters, and other airborne vehicles.

## Claims

1. A method of managing aircraft information comprising:
receiving scheduling information, the scheduling information comprising flight and turnaround information relating to a plurality of aircraft;
extracting the flight and turnaround information for each of the plurality of aircraft from the scheduling information and obtaining an aircraft identification from the extracted flight and turnaround information;
assigning the extracted flight and turnaround information for each of the plurality of aircraft to a channel, wherein each channel corresponds to one of the plurality of aircraft;
providing access to one or more of the channels to one or more authorised users; and
receiving one or more communications from an authorised user;
extracting an aircraft identification from each communication, the aircraft identification indicating which one of the plurality of aircraft each communication is associated with;
assigning each communication to the channel corresponding to the aircraft associated with the communication.

2. The method of claim 1, further comprising:
determining, for each aircraft based on the extracted flight and turnaround information for that aircraft, one or more turnaround tasks to be completed;
monitoring the progress of the one or more turnaround tasks; and
presenting a current status of the one or more turnaround tasks.

3. The method of claim 2, wherein determining, for each aircraft based on the extracted flight and turnaround information for that aircraft, one or more turnaround tasks to be completed comprises:
obtaining an aircraft identification from the extracted flight and turnaround information; and
querying a database for turnaround tasks corresponding to the aircraft identification.

4. The method of claim 1, wherein the plurality of communications comprise communications of a first type and communications of a second type; and
wherein the communications of the first type and the communications of the second type are presented in the channel in an integrated manner.

5. The method of claim 4, wherein the communications of a first type are ACARS messages, and wherein receiving a plurality of communications comprises:
receiving one or more ACARS messages;
extracting an aircraft identification from each of the one or more the ACARS messages, the aircraft identification identifying an aircraft from which the corresponding ACARS message originated;
converting each of the one or more ACARS messages to a message of the second type; and
assigning each of the one or more converted ACARS messages to a channel corresponding to the aircraft from which the message originated.

6. The method of claim 5, wherein each channel corresponding to an aircraft is not capable of displaying ACARS messages but is capable of displaying messages of the second type.

7. The method of any of claims 4 to 6, wherein the communications of the second type are not ACARS messages.

8. The method of claim 7, wherein the communications of the second type are SMS messages, emails, or IP messages.

9. The method of claim 5, wherein the one or more ACARS messages comprise a notification of a status of the originating aircraft or a component of the originating aircraft.

10. The method of claim 9, wherein the method further comprises:
determining, for each aircraft based on the extracted flight and turnaround information for that aircraft, one or more status events;
monitoring the progress of the one or more status events based on the one or more ACARS messages; and
presenting a current status of the one or more status events.

11. The method of claim 10, wherein determining, for each aircraft based on the extracted flight and turnaround information for that aircraft, one or more status events comprises:
obtaining an aircraft identification from the extracted flight and turnaround information; and
querying a database for status events corresponding to the aircraft identification.

12. The method of any of claims 3 to 11, wherein the aircraft identification uniquely identifies an aircraft.

13. The method of claim 1, wherein the aircraft identification comprises one or more of an aircraft registration code, an aircraft model, and a flight number.

14. The method of claim 1, wherein providing access to one or more of the channels to one or more authorised users comprises:
receiving a channel access request from a user;
receiving a permission status of the user; and
allowing access to the channel in accordance with the permission status.

15. The method of claim 14, wherein if the permission status of the user is indicative of a full permission, the method further comprises allowing access in accordance with the permission status comprises allowing the user to view and send communications of a first type and a second type.

16. The method of claim 14, wherein if the permission status of the user is indicative of a partial permission, the method further comprises allowing access in accordance with the permission status comprises allowing the user to view but not send communications of the first type, and view and send communications of the second type.

17. The method of claim 14, wherein if the permission status of the user is indicative of no permission, the method further comprises allowing access in accordance with the permission status comprises not allowing the user to view or send communications of the first type, but allowing the user to view and send communications of the second type.

18. The method of claim 15, wherein the communications of a first type are ACARS messages, and wherein the method further comprises:
receiving, in a channel and from a user with full permission, a message to be sent to the aircraft corresponding to that channel;
converting the message into an ACARS message; and
sending the ACARS message to the aircraft.

19. A computer system configured to perform the method of any preceding claim.

20. A non-transitory memory having stored thereon instructions that, when executed on the computer system of claim 19, cause the computer system to perform the method of any of claims 1 to 18.

## Patentansprüche

1. Verfahren zur Verwaltung von Flugzeuginformationen, umfassend:
Empfangen von Flugplaninformationen, wobei die Flugplaninformationen Flug- und Turnaround-Informationen in Bezug auf eine Mehrzahl von Flugzeugen umfassen;
Extrahieren der Flug- und Turnaround-Informationen für jedes der Mehrzahl von Flugzeugen aus den Flugplaninformationen und Erhalten eines Flugzeugkennzeichens aus den extrahierten Flug- und Turnaround-Informationen;
Zuweisen der extrahierten Flug- und Turnaround-Informationen für jedes der Mehrzahl von Flugzeugen zu einem Kanal, wobei jeder Kanal einem der Mehrzahl von Flugzeugen entspricht;
Bereitstellen des Zugangs zu einem oder mehreren der Kanäle für einen oder mehrere autorisierte Benutzer; und
Empfangen einer oder mehrerer Mitteilungen von einem autorisierten Benutzer;
Extrahieren eines Flugzeugkennzeichens aus jeder Mitteilung, wobei das Flugzeugkennzeichen angibt, mit welchem der Mehrzahl von Flugzeugen jede Mitteilung verbunden ist;
Zuweisen jeder Mitteilung zu dem Kanal, der dem mit der Mitteilung verbundenen Flugzeug entspricht.

2. Verfahren nach Anspruch 1, ferner umfassend:
Bestimmen, für jedes Flugzeug, auf Basis der extrahierten Flug- und Turnaround-Informationen für dieses Flugzeug von einem oder mehreren durchzuführenden Turnaround-Aufgaben;
Überwachen des Verlaufs der einen oder mehreren Turnaround-Aufgaben; und
Darstellen eines aktuellen Zustands der einen oder mehreren Turnaround-Aufgaben.

3. Verfahren nach Anspruch 2, wobei das Bestimmen, für jedes Flugzeug auf Basis der extrahierten Flug- und Turnaround-Informationen für dieses Flugzeug, von einer oder mehreren durchzuführenden Turnaround-Aufgaben Folgendes umfasst:
Erhalten eines Flugzeugkennzeichens aus den extrahierten Flug- und Turnaround-Informationen; und
Abfragen einer Datenbank nach dem Flugzeugkennzeichen entsprechenden Turnaround-Aufgaben.

4. Verfahren nach Anspruch 1, wobei die Mehrzahl von Mitteilungen Mitteilungen eines ersten Typs und Mitteilungen eines zweiten Typs umfassen; und
wobei die Mitteilungen des ersten Typs und die Mitteilungen des zweiten Typs in dem Kanal integriert dargestellt werden.

5. Verfahren nach Anspruch 4, wobei die Mitteilungen eines ersten Typs ACARS-Nachrichten sind und wobei Empfangen einer Mehrzahl von Mitteilungen Folgendes umfasst:
Empfangen von einer oder mehreren ACARS-Nachrichten;
Extrahieren eines Flugzeugkennzeichens aus jeder der einen oder mehreren ACARS-Nachrichten, wobei das Flugzeugkennzeichen ein Flugzeug kennzeichnet, von dem die entsprechende ACARS-Nachricht stammt;
Umwandeln von jeder der einen oder mehreren ACARS-Nachrichten in eine Nachricht des zweiten Typs; und
Zuweisen von jeder der einen oder mehreren umgewandelten ACARS-Nachrichten zu einem Kanal, der dem Flugzeug entspricht, von dem die Nachricht stammte.

6. Verfahren nach Anspruch 5, wobei jeder einem Flugzeug entsprechende Kanal keine ACARS-Nachrichten anzeigen kann, aber Nachrichten des zweiten Typs anzeigen kann.

7. Verfahren nach einem der Ansprüche 4 bis 6, wobei die Mitteilungen des zweiten Typs keine ACARS-Nachrichten sind.

8. Verfahren nach Anspruch 7, wobei die Mitteilungen des zweiten Typs SMS-Nachrichten, E-Mails oder IP-Nachrichten sind.

9. Verfahren nach Anspruch 5, wobei die eine oder mehreren ACARS-Mitteilungen eine Benachrichtigung über einen Status des Herkunftsflugzeugs oder einer Komponente des Herkunftsflugzeugs umfassen.

10. Verfahren nach Anspruch 9, wobei das Verfahren ferner Folgendes umfasst:
Bestimmen, für jedes Flugzeug auf Basis der extrahierten Flug- und Turnaround-Informationen für dieses Flugzeug, von einem oder mehreren Statusereignissen;
Überwachen des Verlaufs des einen oder der mehreren Statusereignisse auf Basis der einen oder mehreren ACARS-Nachrichten; und
Darstellen eines aktuellen Status der einen oder mehreren Statusereignisse.

11. Verfahren nach Anspruch 10, wobei das Bestimmen, für jedes Flugzeug, auf Basis der extrahierten Flug- und Turnaround-Informationen für dieses Flugzeug, von einem oder mehreren Statusereignissen Folgendes umfasst:
Erhalten eines Flugzeugkennzeichens aus den extrahierten Flug- und Turnaround-Informationen; und
Abfragen einer Datenbank nach dem Flugzeugkennzeichen entsprechenden Statusereignissen.

12. Verfahren nach einem der Ansprüche 3 bis 11, wobei das Flugzeugkennzeichen ein Flugzeug eindeutig kennzeichnet.

13. Verfahren nach Anspruch 1, wobei das Flugzeugkennzeichen einen oder mehrere von einem Luftfahrzeugkennzeichen, einem Flugzeugmodell oder einer Flugnummer umfasst.

14. Verfahren nach Anspruch 1, wobei das Gewähren von Zugriff auf einen oder mehrere der Kanäle für einen oder mehrere autorisierte Benutzer Folgendes umfasst:
Empfangen einer Kanalzugriffsanforderung von einem Benutzer;
Empfangen eines Berechtigungsstatus des Benutzers; und
Gewähren des Zugriffs auf den Kanal gemäß dem Berechtigungsstatus.

15. Verfahren nach Anspruch 14, wobei, wenn der Berechtigungsstatus des Benutzers für eine volle Berechtigung bezeichnend ist, das Verfahren ferner umfasst, dass das Gewähren von Zugriff gemäß dem Berechtigungsstatus umfasst, dass der Benutzer Mitteilungen eines ersten Typs und eines zweiten Typs sehen und senden darf.

16. Verfahren nach Anspruch 14, wobei, wenn der Berechtigungsstatus des Benutzers für eine teilweise Berechtigung bezeichnend ist, das Verfahren ferner umfasst, dass das Gewähren von Zugriff gemäß dem Berechtigungsstatus umfasst, dass der Benutzer Mitteilungen des ersten Typs sehen aber nicht senden darf und Mitteilungen des zweiten Typs sehen und senden darf.

17. Verfahren nach Anspruch 14, wobei, wenn der Berechtigungsstatus des Benutzers für keine Berechtigung bezeichnend ist, das Verfahren ferner umfasst, dass das Gewähren von Zugriff gemäß dem Berechtigungsstatus umfasst, dass der Benutzer Mitteilungen des ersten Typs nicht sehen oder senden darf, der Benutzer aber Mitteilungen des zweiten Typs sehen und senden darf.

18. Verfahren nach Anspruch 15, wobei die Mitteilungen eines ersten Typs ACARS-Nachrichten sind und wobei das Verfahren ferner Folgendes umfasst:
Empfangen, in einem Kanal und von einem Benutzer mit voller Berechtigung, einer an das Flugzeug, das diesem Kanal entspricht, zu sendenden Nachricht;
Umwandeln der Nachricht in eine ACARS-Nachricht; und
Senden der ACARS-Nachricht an das Flugzeug.

19. Computersystem, das zum Durchführen des Verfahrens nach einem der vorhergehenden Ansprüche konfiguriert ist.

20. Nichtflüchtiger Speicher mit in demselben gespeicherten Anweisungen, die bei Ausführung in dem Computersystem nach Anspruch 19 das Computersystem zum Durchführen des Verfahrens nach einem der Ansprüche 1 bis 18 veranlassen.

## Revendications

1. Procédé de gestion d'informations d'aéronefs, comprenant :
recevoir des informations de planification, les informations de planification comprenant des informations de vol et de rotation concernant une pluralité d'aéronefs ;
extraire les informations de vol et de rotation de la pluralité d'aéronefs des informations de planification et obtenir une identification d'aéronef des informations de vol et de rotation ;
attribuer les informations de vol et de rotation extraites pour chacun de la pluralité d'aéronefs à un canal, dans lequel chaque canal correspond à l'un de la pluralité d'aéronefs ;
fournir l'accès à un ou plusieurs des canaux à un ou plusieurs utilisateurs autorisés ; et
recevoir une ou plusieurs communications d'un utilisateur autorisé ;
extraire une identification d'aéronef de chaque communication, l'identification d'aéronef indiquant avec lequel de la pluralité d'aéronefs chaque communication est associée ;
attribuer chaque communication au canal correspondant à l'aéronef associé à la communication.

2. Procédé selon la revendication 1, comprenant en outre :
déterminer, pour chaque aéronef sur la base des informations de vol et de rotation extraites pour cet aéronef, une ou plusieurs tâches de rotation à terminer ;
surveiller le progrès de l'une ou plusieurs tâches de rotation ; et
présenter un statut actuel de l'une ou plusieurs tâches de rotation.

3. Procédé selon la revendication 2, dans lequel déterminer, pour chaque aéronef sur la base des informations de vol et de rotation extraites pour cet aéronef, une ou plusieurs tâches de rotation à terminer comprend :
obtenir une identification d'aéronef des informations de vol et de rotation extraites ; et
interroger une base de données sur les tâches de rotation correspondant à l'identification de l'aéronef.

4. Procédé selon la revendication 1, dans lequel la pluralité de communications comprennent des communications d'un premier type et des communications d'un deuxième type ; et
dans lequel les communications du premier type et les communications du deuxième type sont présentées dans le canal de manière intégrée.

5. Procédé selon la revendication 4, dans lequel les communications d'un premier type sont des messages ACARS, et dans lequel recevoir une pluralité de communications comprend :
recevoir un ou plusieurs messages ACARS ;
extraire une identification d'aéronef de chacun de l'un ou plusieurs messages ACARS, l'identification d'aéronef identifiant un aéronef duquel le massage ACARS correspondant provenait ;
convertir chacun de l'un ou plusieurs messages ACARS en un message du deuxième type ; et
attribuer chacun de l'un ou plusieurs messages ACARS à un canal correspondant à l'aéronef duquel le message provenait.

6. Procédé selon la revendication 5, dans lequel chaque canal correspondant à un aéronef est incapable d'afficher des messages ACARS mais est capable d'afficher des messages du deuxième type.

7. Procédé selon l'une quelconque des revendications 4 à 6, dans lequel les communications du deuxième type ne sont pas des messages ACARS.

8. Procédé selon la revendication 7, dans lequel les communications du deuxième type sont des messages SMS, des courriels ou des messages IP.

9. Procédé selon la revendication 5, dans lequel l'un ou plusieurs messages ACARS comprennent une notification d'un statut de l'aéronef d'origine ou d'un composant de l'aéronef d'origine.

10. Procédé selon la revendication 9, où le procédé comprend en outre :
déterminer, pour chaque aéronef sur la base des informations de vol et de rotation extraites pour cet aéronef, un ou plusieurs événements de statut ;
surveiller le progrès de l'un ou plusieurs événements de statut sur la base de l'un ou plusieurs messages ACARS ; et
présenter un statut actuel de l'un ou plusieurs événements de statut.

11. Procédé selon la revendication 10, dans lequel déterminer, pour chaque aéronef sur la base des informations de vol et de rotation extraites pour cet aéronef, un ou plusieurs événements de statut comprend :
obtenir une identification d'aéronef des informations de vol et de rotation ; et
interroger une base de données sur des événements de statut correspondant à l'identification de l'aéronef.

12. Procédé selon l'une quelconque des revendications 3 à 11, dans lequel l'identification d'aéronef identifie un aéronef de manière unique.

13. Procédé selon la revendication 1, dans lequel l'identification d'aéronef comprend un ou plusieurs d'entre un code d'enregistrement de l'aéronef, un modèle de l'aéronef et un numéro de vol.

14. Procédé selon la revendication 1, dans lequel fournir l'accès à un ou plusieurs canaux à un ou plusieurs utilisateurs autorisés comprend :
recevoir une requête d'accès à un canal d'un utilisateur ;
recevoir un statut de permission de l'utilisateur ; et
permettre l'accès au canal conformément au statut de permission.

15. Procédé selon la revendication 14, dans lequel si le statut de permission de l'utilisateur est indicatif de permission complète, le procédé comprend en outre permettre l'accès conformément au statut de permission, comprend permettre à l'utilisateur de visualiser et d'envoyer des communications d'un premier type et d'un deuxième type.

16. Procédé selon la revendication 14, dans lequel si le statut de permission de l'utilisateur est indicatif de permission partielle, le procédé comprend en outre permettre l'accès conformément au statut de permission, comprend permettre à l'utilisateur de visualiser mais pas d'envoyer des communications du premier type, et de visualiser et d'envoyer des communications du deuxième type.

17. Procédé selon la revendication 14, dans lequel si le statut de permission est indicatif d'aucune permission, le procédé comprend en outre permettre l'accès conformément au statut de permission, comprend ne pas permettre à l'utilisateur de visualiser ou d'envoyer des communications du premier type, mais permettre à l'utilisateur de visualiser et d'envoyer des communications du deuxième type.

18. Procédé selon la revendication 15, dans lequel les communications d'un premier type sont des messages ACARS, et où le procédé comprend en outre :
recevoir, dans un canal et d'un utilisateur ayant la permission complète, un message à envoyer à l'aéronef correspondant à ce canal ;
convertir le message en un message ACARS ; et
envoyer le message ACARS à l'aéronef.

19. Système informatique configuré pour mettre en œuvre le procédé selon l'une quelconque des revendications précédentes.

20. Mémoire non transitoire ayant des instructions stockées dessus qui, lorsque exécutées sur le système informatique selon la revendication 19, font que le système informatique met en œuvre le procédé selon l'une quelconque des revendications 1 à 18.
